Europäisches Patentamt

European Patent Office

Office européen des brevets

(11) Publication number: **0 342 764**
**A1**

## EUROPEAN PATENT APPLICATION

(21) Application number: 89201282.4

(22) Date of filing: 19.05.89

(51) Int. Cl.⁴: **G06F 15/16**

(30) Priority: 20.05.88 NL 8801320

(43) Date of publication of application:
23.11.89 Bulletin 89/47

(84) Designated Contracting States:
AT BE CH DE ES FR GB GR IT LI LU NL SE

(71) Applicant: PPG HELLIGE B.V.
I.B.C.-Weg 1
NL-5683 PK Best(NL)

(72) Inventor: Nuijten, Arnoldus Gerardus
Diabolo 5
NL-5683 LA Best(NL)
Inventor: Van Melis, Arnoldus Johan Jacobus
Maria
Nemerlaerhof 270
NL-5709 NR Helmond(NL)

(74) Representative: de Bruijn, Leendert C. et al
Nederlandsch Octrooibureau
Scheveningseweg 82 P.O. Box 29720
NL-2502 LS 's-Gravenhage(NL)

(54) System message handler in a data processing system.

(57) Data processing system comprising a number of modules, each having enough processing capabilities to perform a predetermined application task, which modules are able to communicate with each other through unidirectional channels using mailboxes, one in each module destined to receive message transmitted via said unidirectional channels, one of said modules functioning as system message handler the application task of which is to provide at request of each module the data necessary to enable the requesting module to open a channel to another module and to transfer a message via the opened channel to said other module, whereby each module incorporates at least communication functions for opening a channel to another module, transferring a message via the opened channel to said other module and closing the used channel.

fig-1

## System message handler in a data processing system

The invention relates to a data processing system, comprising a number of modules communicating messages to each other with the help of a system message handler.

System of the above type are known in various embodiments. Generally these prior art systems comprise a central communication unit coordinating the transfer of messages between the modules of the system. An example of such a system comprising a central exchange unit with a number of mailboxes is described in the PCT-application WO 87/07801. The modules of this prior art system are telephone apparatusses, data terminals, personal computers, faxcimile apparatusses, etc., all sending messages to a central exchange unit providing single electronic mailboxes for different types of messages. The proper functioning of such a system with one centralized message handling unit relies very heavily on the capacity, reliability and capabilities of this centralized message handling unit. Expension of the system will in general be restricted or meet objections, because of hardware and/or software requirements. In other words, this prior art systems are not very flexible.

The aim of the invention is now to provide a flexible system architecture for a data processing system comprising a number of mutually communicating modules.

In agreement with said object the invention now provides a data processing system comprising a number of modules, each having enough processing capabilities to perform a predetermined application task, which modules are able to communicate with each other through unidirectional channels using mailboxes, one in each module destined to receive message transmitted via said unidirectional channels, one of said modules functioning as system message handler the application task of which is to provide at request of each module the data necessary to enable the requesting module to open a channel to another module and to transfer a message via the opened channel to said other module, whereby each module incorporates at least communication functions for opening a channel to another module, transferring a message via the opened channel to said other module and closing the used channel.

Because according to the invention the functions of the centralized communications handling unit, known from the prior art systems, are distributed over the various modules of the system such, that each module has the capability of transferring a message directly to any other module, the system message handler mainly functions as communication data source and module responding to error messages. Therewith a very flexible communication system is created in which various communication procedures can be carried out simultaneously without serious congestion problems and in which the addition or elimination of a module does not cause any problem.

The invention will be explained in more detail with reference to the attached drawings in which:

Figure 1 illustrates a first embodiment of a system in which the invention is brought into practice.

Figure 2 illustrates a further developped embodiment of a system according to the invention.

Figure 3 illustrates two coupled systems in which the communication procedures are carried out in agreement with the invention.

Figure 4 illustrates the use of a number of systems each embodied in agreement with the invention, and each connected to a local area network for communication between the systems.

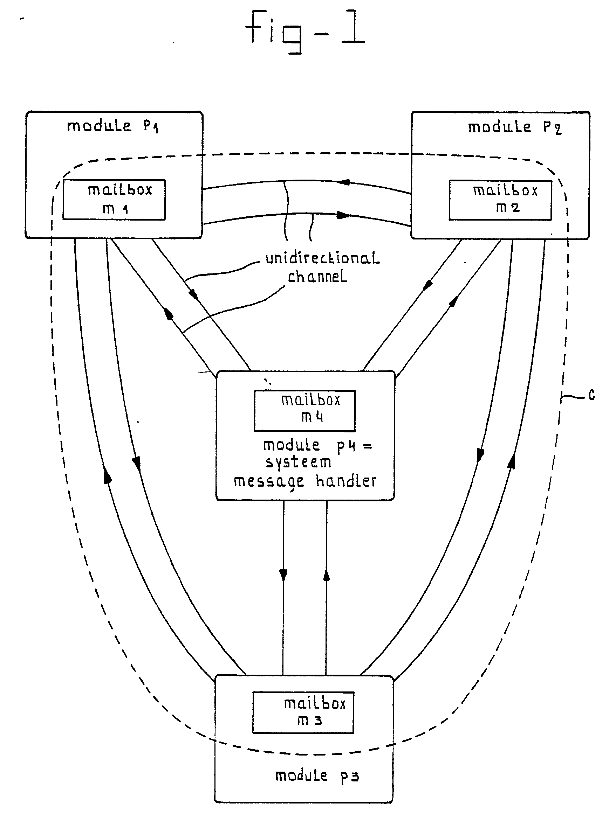

Figure 1 illustrates in a very schematical way a system in which the invention can be brought into practice. The system can be considered as a complete collection of hardware and software, the purpose of which will not be specified because specification thereof is irrelevant in view of the underlying invention. The system comprises a number of modules, four of which are shown in figure 1, referred to as module P1 ....P4. Each module can be considered as a complete software and/or hardware entity. In principle each module is able to communicate with any other module in the system by means of a bus structure interconnecting all these modules. The actual configuration of this bus structure is irrelevant for the invention and therefore will not be explained in detail. Any prior art bus structure can be used as long as it provides the possibility for every module to communicate with any other module. However, the way in which the communication is established forms part of the invention and will be described in detail hereinafter.

As already said each of the modules P1 .... P4 of the system in figure 1 should have the possibility to communicate with any other module in the system. For that purpose each module has a mailbox, indicated by the references M1 .... M4 in figure 1 and incorporated in the respective modules p1 .... P4. Furthermore it will be necessary to provide a communication channel for every module who wants to transfer a message to one of the other modules. Via the underlying bus structure, interconnecting all the modules, a number of channels can be created running from one specific module to another specific module and destined for the transfer of one message between those two modules. In figure 1 these unidirectional channels are shown. The way in which these channels are temporarily created specifically for the transfer of one message, will be described in more detail in the following description. Important now is to point the attention to the fact that in agreement with the invention any module should have the possibility to create a channel directly to any other module. That would imply that any module should incorporate a memory with the complete system configuration data, because only than a module has the power to open a channel to any other module. Such a solution is considered very impracticable. Therefore one of the modules is given the specific task to coordinate the transfer of messages between the various other modules on the basis of the complete configuration data. This module, module P4 in figure 1, is named as the system message handler. The system message handler, module P4, provides at request of the other modules any information necessary to establish a direct connection between the requesting module and a specific other module. The way in which a message is transferred between a first module and a second module will be described the following.

During initialization of the system or together with the opening of a channel a mailbox is created in each of the modules P1 .... P4. These mailboxes are destined only to receive messages from other modules, i.e. they fulfil a buffer function between the channel, through wich a message is received and which channel is controlled by the sending module and the receiving module to which the mailbox belongs. Once a mailbox is created, it can he opened by any other module. The name of the mailbox is not important. It is only important that all users of a mailbox (all other modules) know of the same name. Preferably the volume of a mailbox is a variable parameter providing the possibility to receive messages with variable length or to receive a number of messages in a row, which will be stacked in a predetermined order in the mailbox. At creation time a parameter can be given that will indicate the probable maximum number of messages at any one time. This said maximum number of messages is unaffected by the number of subsequent attempts to open the mailbox for writing a message. The syntax for the opening a channel and therewith opening the mailbox in the receiving module will be
channel = open/create (ident_string, r_w, max_messgs); where
- indent_string is an ASCII identifing sequence;
- r_w is an indicator as to whether the channel will be used for reading or writing, and
- maxmessgs will give an indication of how many messages will be passed through the mailbox and thus how many buffers to reserve;
This value will only be valid at the first open/create of a mailbox.

The ident_string will be of limited length in a practical embodiment. In many cases only the first 6 chars will be considered valid and all identstrings will have to be unique within the first 6 chars. Other embodiments, however, can use other numbers of characters depending onto the configuration of the system. If the channel or mailbox cannot be created or opened for any reason then an error indicator will be returned, otherwise an identifier to a channel will be returned.

When the channel is opened and therewith the mailbox at the other end is ready to receive a message a buffer for writing a message may be assigned to the mailbox. The assigned buffer will be given a predetermined length and a priority. Write operations in the mailbox will be indivisible, i.e. when more than one module wishes to write to the same mailbox only one will succeed at any one time. The others will be suspended. If the length of the message is greater than the maximum system length than an error will be returned. The syntax of the write will be
error = write (channel, buffer, length, priority);
where
- channel is the value returned by an open/create;
- buffer is the address of a buffer space;
- length is the number of bytes to be transferred and
- priority will be an indicator of the priority required in the transfer.

The number of priority levels can be selected arbitrarily, but in practical embodiments a restriction depending onto the system configuration will be taken into account.

Should the write succeed (the message is properly transferred to the mailbox of the receiving module) then an indicator will be returned indicating no error. The sending module does not wait until the receiving module has read the message. I.e. transfer into a memory in the receiving module is considered sufficient assurance of proper reception. By means of the length parameter the sending module will quarantee that the buffer in the receiving module is long enough for the mailbox to read the number of bytes indicated.

The reading process carried out in the receiving module will read one message at a time. It will never receive more bytes than it whishes to receive. However, the possibility of re-reading a message will not exist. A message will exist as a single entity. When a part of it has been read the whole message will be considered read and thrown away from the mailbox. (In practice this means that a reading process will always attempt to read the maximum size.) It will not be an error for a read operation to request more bytes than exist. Always, if no error occurs the reader will receive a count of the number of bytes received. The syntax will be

count = read (channel, buffer, length);
where
- channel will be the identifier returned by a succeeding open/create;
- buffer will be the start address of a buffer guaranteed to be long enough to contain the number of bytes specified in length.

If no error occurs then the number of bytes written into the buffer will be returned. (0 will never he valid, i.e. writes of 0 bytes will be ignored.) It is preferred, that all error codes are negative so as to be able to differentiate between good reads and errors.

It may be required that there exists the possibility of assessing whether a message exists at a mailbox (polling), or timing-out if a message is not received within a certain time.

As soon as the sending module has finished with a mailbox he will close the mailbox passing the channel number he received at open/create time. The syntax is

error = close (channel);
Should an error occur then he will receive an errorstatus.

Any subsequent attempt to re-open the same channel will not necessarily return the same channel number, i.e. the channel number is only a temporary link between a token (ident_string) and the real channel.

It is possible to transfer messages with a certain priority. For a series of sending modules all transferring messages with the same priority the receiving mailbox will get the messages in an arbitrary order. If a module is sending messages with the same priority then these messages will be delivered in the same order as sent. However, higher priority messages sent to a mailbox will always be recieved before lower priority messages.

Should the internal buffering of the mailbox be full, i.e. the reading process in the receiving module is running slower than the sending process in the originating module, then the sending module will be stopped. This will also be true should the sending module wishes to send a high-priority message. Therewith it is guaranteed that what is sent to a mailbox will be recieved therein. No internal congestion control will be necessary and no message will be lost.

It will be clear from the above description that all communication functions are carried out within the frame C. Each module incorporates some communication functions necessary to open and close channels and sending messages.

In the above description it is assumed that every module has sufficient information about the configuration of the whole system, addresses of other modules etc., to directly open a channel to anyone of the other modules. That assumption is, however, not correct. After start up of the system all the necessary information about the actual configuration of the system is stored within a memory, accessible by a specific module, called the system representative.

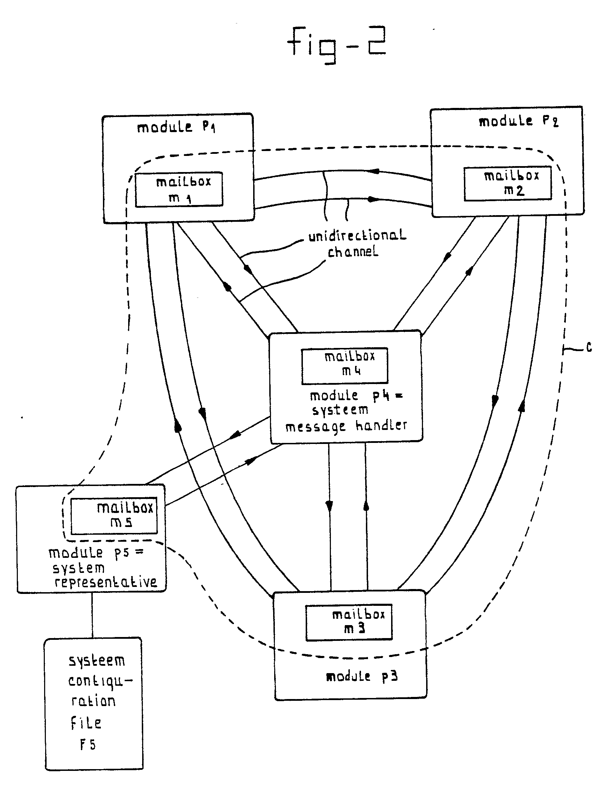

Figure 2 illustrates the same system as in figure 1, however, expanded with another module P5 functioning as a system representative, having acces to a memory file F1 comprising all the necessary address information and further details of the configuration and necessary to specify and define all the various components of the system.

At system start up the system representative, module P5, starts to read the memory file F1. Thereafter, or simultaneous with the reading process all the data necessary to built up a communication path between any two modules is transferred from the system representative module P5 to the system message handler module P4. After completion of this procedure the system message handler is able to provide details on request to any of the other modules.

If for instance module P1 like to transfer a message to module P2 then he first of all has to know the unique address of module P2. The only thing he knows, however, is the address of the system message handler and therefore he opens a channel to the system message handler and sends a data request to module P4. In response thereto the system message handler module P4 sends the necessary details to the mailbox of module P1 enabling module P1 thereby to open directly a channel to module P2 to transfer of this message. The configuration data necessary to reach module P2 will be stored within module P1 so that for any further attempt from module P1 to sent a message to module P2 no data request to the system message handler module P4 will be necessary.

It will be clear that provided that each module has sufficient memory available, gradually during the operation of the whole system each of the modules will obtain enough configuration information to be able to built up communication channels to any other module without the assistance of the system message handler. In that stage the system message handler only functions as a central module receiving eventual error codes and taking the necessary steps to respond to these error codes.

In most embodiments this requires, however, large memory spaces which is a disadvantage. It is therefore preferred to keep track in each module of the most frequently accessed modules and to store only the relevant data about these modules. That implies that for message transfer to a non frequently accessed module a data request to the

system message handler P$_4$ will be necessary.

If in a specific module the memory space is very restricted then always a data request to the system message handler will be the only way to start communications.

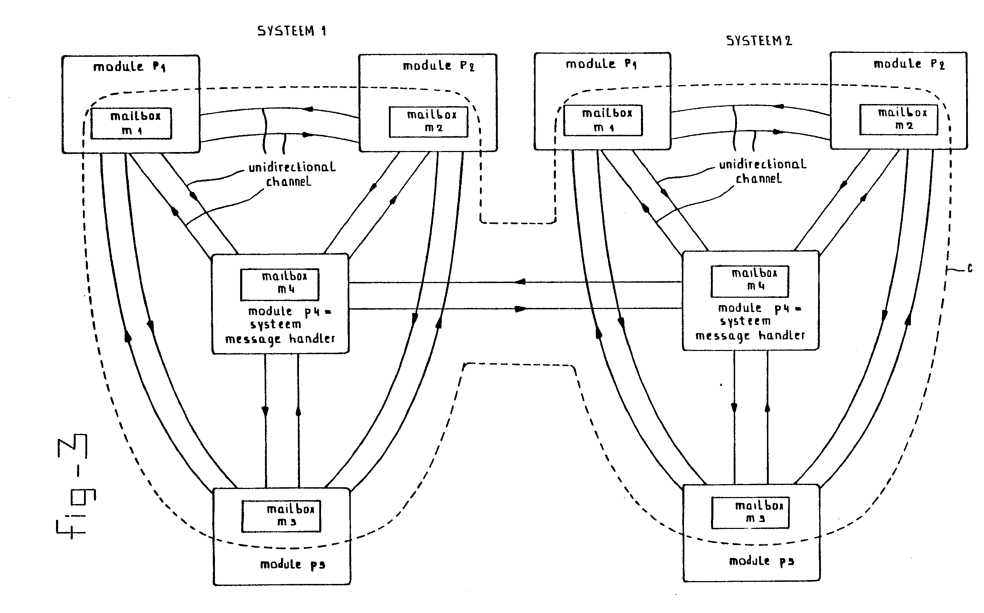

In a further development of the invention it is possible to exchange messages between a number of systems of the type illustrated in figure 1 or 2. A network comprising two different systems is illustrated as example in figure 3. The two different systems are indicated by S1 and S2, each comprising a number of modules, one of which is functioning as system message handler. As is illustrated in figure 3 the underlying hardware and/or software of both systems is embodied such that it will be possible to open a channel from the system message handler of system 1 to the system message handler of system 2 and vice versa. In the same way as described above both system message handlers now have the possibility to transfer messages to each other. Because information about each of the systems is completely available in the corresponding system message handler (and assuming that each message handler knows now to address any other system message handler) it is now possible that any module of system 1 sends a message to any module in system 2 by opening a channel to his own system message handler, which in turn will open a channel to the system message handler of the other system and from there to the module of destination.

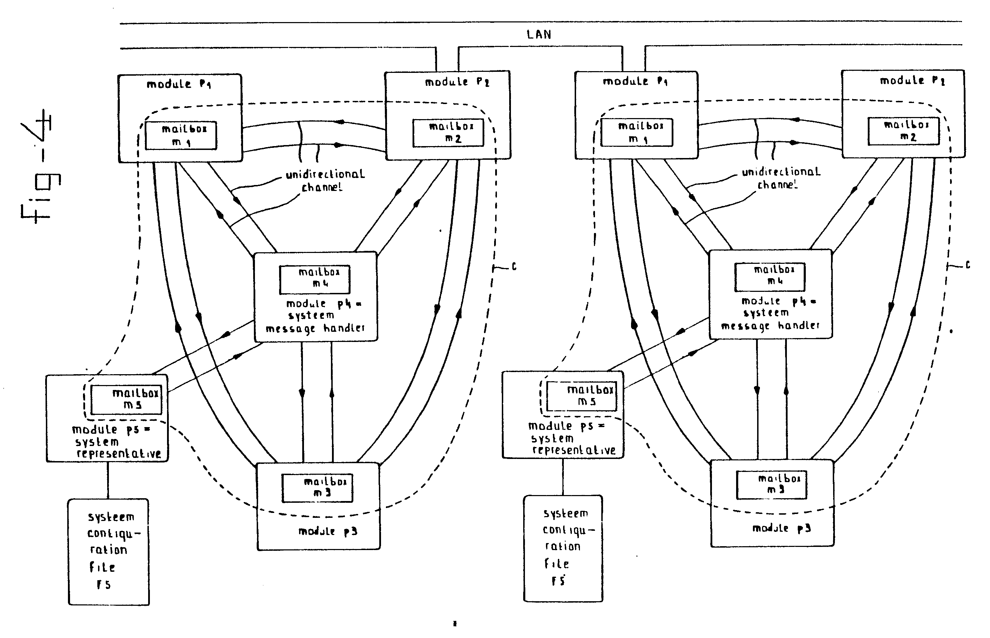

Figure 4 illustrates another way of coupling two systems according to the invention. The systems are again referred to as system 1 and system 2. One of the modules of system 1 is connected to a Local Area Network, abreviated in figure 4 as LAN. Also one of the modules of system 2 is connected to the LAN. If it is assumed that the applications runnning in both LAN connected modules are able to transfer messages through the LAN then an effective coupling between both systems is created.

## Claims

1. Data processing system comprising a number of modules, each having enough processing capabilities to perform a predetermined application task, which modules are able to communicate with each other through unidirectional channels using mailboxes, one in each module destined to receive message transmitted via said unidirectional channels, one of said modules functioning as system message handler the application task of which is to provide at request of each module the data necessary to enable the requesting module to open a channel to another module and to transfer a message via the opened channel to said other module, whereby each module incorporates at least communication functions for opening a channel to another module, transferring a message via the opened channel to said other module and closing the used channel.

2. Data processing system according to claim 1, wherein each module has sufficient memory to store at least part of said data, received from the system message handler and necessary to enable message transfer to another module, so that any further message can be transferred to said specific other module at least partly without sending a request to the system message handler.

3. Data processing system according to claim 2, wherein each module keeps track of the number of messages send to any other module and werein only the data relating to the most frequently accessed modules is stored.

4. Data processing system according to any of the preceeding claims, wherein one of said modules is functioning as system representative, the application task of which is to initiate the system at start up by reading a system data file and transferring the obtained data to the various modules such that at least in the system message handler address information about the mailboxes of the system is present.

5. Data processing system according to any of the preceeding claims, wherein the mailbox in the receiving module is created together with the opening of a channel to the receiving module by a module who wishes to send a message to said receiving module.

6. Data processing system according to claim 4, wherein the volume of the mailbox is adapted to the length of the message to be transferred, which length is specified together with the opening of the communication channel respectively together with the creation of the mailbox.

7. Data processing network comprising at least two data processing systems as defined in any of the preceeding claims, whereby at least the system message handlers of the at least two data processing systems have the possibility to communicate messages to each other.

8. Data processing system or network according to one of the preceeding claims, wherein at least one of said modules has the possibility to communicate messages through a local area network.

# fig-1

module P₁

mailbox
m 1

module P₂

mailbox
m 2

unidirectional
channel

mailbox
m 4

module  p4 =
systeem
message handler

c

mailbox
m 3

module p3

# fig-2

module P₁

module P₂

mailbox
m₁

mailbox
m₂

unidirectional
channel

mailbox
m₄

module p4 =
systeem
message handler

c

mailbox
m₅

module p5 =
system
representative

mailbox
m₃

systeem
contigu-
ration
file
F5

module p3

fig-3

SYSTEEM 1

module P4
mailbox m4

module P3
mailbox m3

module P4 =
systeem
message handler
mailbox m4

module P2
mailbox m2

unidirectional channel

SYSTEEM 2

module P4
mailbox m4

module P3
mailbox m3

module P4 =
systeem
message handler
mailbox m4

module P2
mailbox m2

unidirectional channel

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | COLLOQUE INTERNATIONAL DE COMMUTATION, Paris, 7th - 11th May 1979, pages 834-839; C. DURET: "Réseau de connexion à structure nodale" * Figure 1; page 834, left-hand column, lines 1-22; page 835, left-hand column, lines 1-30; page 837, left-hand column, line 45 - right-hand column, line 14 * | 1 | G 06 F 15/16 |
| A | IDEM --- | 7 | |
| Y | ELEKTRONIK, vol. 33, no. 21, 19 october 1984, pages 229-232, Munich, DE; W. KESSEL et al.: "Multi-mikrocomputer-konzept mit mailbox-schnittstellen" * Page 229, right-hand column, line 15 - page 230, left-hand column, line 18 * | 1 | |
| A | IDEM --- | 5,6 | TECHNICAL FIELDS SEARCHED (Int. Cl.4) |
| A | EP-A-0 221 360 (IBM) * Figure 10, page 2, line 1 - page 3, line 4; page 4, line 17 - page 5, line 11; page 6, lines 24-31; page 10, lines 9-25 * --- | 1-3,8 | G 06 F 15/16 |
| A | US-A-4 642 758 (TENG) * Figures 1,2; column 1, line 1 - column 2, line 58; column 7, lines 5-48; column 15, line 32 - column 16, line 60 * --- | 1,5,6 | |
| A | EP-A-0 201 063 (COMPUTER X) * Page 11, line 21 - page 12, line 5; page 22, lines 8-11; page 41, line 1 - page 42, line 4 * ---          -/- | 2,3,6 | |

The present search report has been drawn up for all claims

| Place of search | Date of completion of the search | Examiner |
|---|---|---|
| THE HAGUE | 21-08-1989 | SCHENKELS P.F. |

European Patent
Office

EUROPEAN SEARCH REPORT

Application Number

EP 89 20 1282

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 270 680 (FANUC LTD)<br>* Figure 1; page 2, lines 2-16 *<br>----- | 4 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 21-08-1989 | SCHENKELS P.F. |